Europäisches Patentamt

European Patent Office

Office européen des brevets

(11) Veröffentlichungsnummer: **0 378 839**
**A2**

## EUROPÄISCHE PATENTANMELDUNG

(21) Anmeldenummer: 89123648.1

(22) Anmeldetag: 21.12.89

(51) Int. Cl.⁵: **B64C 27/46, H01Q 17/00**

(30) Priorität: 14.01.89 DE 3901012

(43) Veröffentlichungstag der Anmeldung:
25.07.90 Patentblatt 90/30

(84) Benannte Vertragsstaaten:
**FR GB IT**

(71) Anmelder: **Messerschmitt-Bölkow-Blohm Gesellschaft mit beschränkter Haftung**
**Robert-Koch-Strasse**
**D-8012 Ottobrunn(DE)**

(72) Erfinder: **Bettermann, Joachim**
**Vogelsangstrasse 39**
**D-2870 Delmenhorst(DE)**
Erfinder: **Kruse, Jürgen**
**Bernhard-Winter-Strasse 15**
**D-2875 Ganderkesee(DE)**

(54) **Rotorblatt.**

(57) Ein Rotorblatt, das insbesondere für eine Verwendung bei Hubschraubern geeignet ist und das aus einem nichtmetallischen Werkstoff besteht, ist im Bereich seiner Vorderkante mit einer Verkleidung versehen, die aus einem die elektromagnetische Strahlung, insbesondere im Frequenzbereich der Radarstrahlung, absorbierenden Werkstoff besteht. Die Verkleidung kann entweder selbsttragend, als Sekundärstruktur oder aber als Beschichtung ausgebildet sein, und besteht vorzugsweise aus Polyurethan, aus Keramik, Faserverbundstoff oder Elastomerwerkstoff zur weiteren Reduzierung des Radarquerschnittes eines solchen Rotorblattes ist ferner der rückwärtige Bereich des Rotorblattprofils mit einer Schicht aus radarreflektierendem Material versehen.

EP 0 378 839 A2

## Rotorblatt

Die Erfindung betrifft ein Rotorblatt, insbesondere für Hubschrauber, aus einem nichtmetallischen Werkstoff, bei dem im Bereich der Vorderkante eine erosionsmindernde Verkleidung angeordnet ist.

Rotorblätter für Hubschrauber werden vielfach in Sandwich-Bauweise hergestellt, bei der in einer tragenden Hülle aus einem glasfaserverstärkten Kunststoff ein Schaumstoffkern angeordnet ist. Häufig ist dabei die Vorderkante der Rotorblätter zur Herabsetzung des erosiven Verschleißes mit einer Metallverkleidung versehen. So ist aus der Zeitschrift "Flight international" vom 10. April 1982, Seite 924, ein Rotorblatt der eingangs genannten Art bekannt, bei dem die Vorderkante mit einem erosionsmindernden Schild aus Titanblech verkleidet ist.

Rotorblätter dieser Bauweise verursachen aufgrund dieser Metallnase sowie durch ihren teiltransparenten Aufbau, der Reflexionen aus dem Inneren des Blattes zuläßt, relativ starke Radarreflexe. Wegen dieser speziellen Rotorblatt-Radarsignatur und infolge der typischen, sogenannten "blip-Signatur" des rotierenden Rotorblattes sind Hubschrauber bereits in vergleichsweise großer Entfernung auf dem Radarschirm leicht zu identifizieren und bei ihrem Einsatz dementsprechend stark gefährdet.

Aufgabe der Erfindung ist es deshalb, ein Rotorblatt der eingangs genannten Art so auszubilden, daß die Überlebenswahrscheinlichkeit eines mit derartigen Rotorblättern ausgerüsteten Hubschraubers durch die weitestmögliche Verminderung seiner Radarerkennung deutlich erhöht wird.

Diese Aufgabe löst die Erfindung durch die im Kennzeichen des Patentanspruches 1 angegebene Maßnahme, durch die zum einen eine breitbandige Reflexionsdämpfung der elektromagnetischen Strahlung am Rotorblatt erreicht wird. Durch die erfindungsgemäß weiterhin vorgesehene Maßnahme, den rückwärtigen Bereich des Rotorblattprofils so auszubilden, daß er elektromagnetische Strahlung reflektiert, wird das Eindringen der Radarwellen in das für elektromagnetische Strahlung teiltransparente Rotorblatt vermieden.Die Erfindung eignet sich dabei insbesondere auch für eine Nachrüstung von bereits im Einsatz befindlichen Hubschraubern, wobei deren Rotorblätter der Erfindung entsprechend umgestaltet werden.

Die radarabsorbierende Ausbildung der Rotorblatt-Vorderkante kann als Primär-, als Sekundärstruktur oder aber auch als nichttragende Struktur, etwa in Form einer zugleich radarabsorbierenden und erosionsmindernden Beschichtung im Bereich der bisher verwendeten metallischen Erosionsschutzschale ausgebildet sein.

Die Verwendung von Lackierungen oder Beschichtungen aus Kunststoffen oder Gummi als Auflage auf Objekten, die auf diese Weise gegen eine Radarerkennung geschützt werden sollen, ist dabei für sich genommen bereits aus der US-PS 32 90 680 bekannt, in der die Herstellung eines aus derartigen Materialien bestehenden Radaradsorbers beschrieben ist.

Insgesamt ergibt sich durch die erfindungsgemäß vorgesehenen Maßnahmen eine drastische Absenkung des Spitzen-Radarquerschnittes, der dann entsteht, wenn die Wellen der Radarstrahlung senkrecht zur Längsachse des Rotorblattes einfallen.

Nachfolgend soll die Erfindung anhand eines in der Zeichnung dargestellten Ausführungsbeispiels näher erläutert werden. Es zeigen:

Fig. 1 einen Querschnitt durch ein Rotorblatt und

Fig. 2 einen Teil des Hinterkantenbereiches der in Fig. 1 dargestellten Anordnung.

In den Figuren sind gleiche Bauteile mit den gleichen Bezugzeichen versehen.

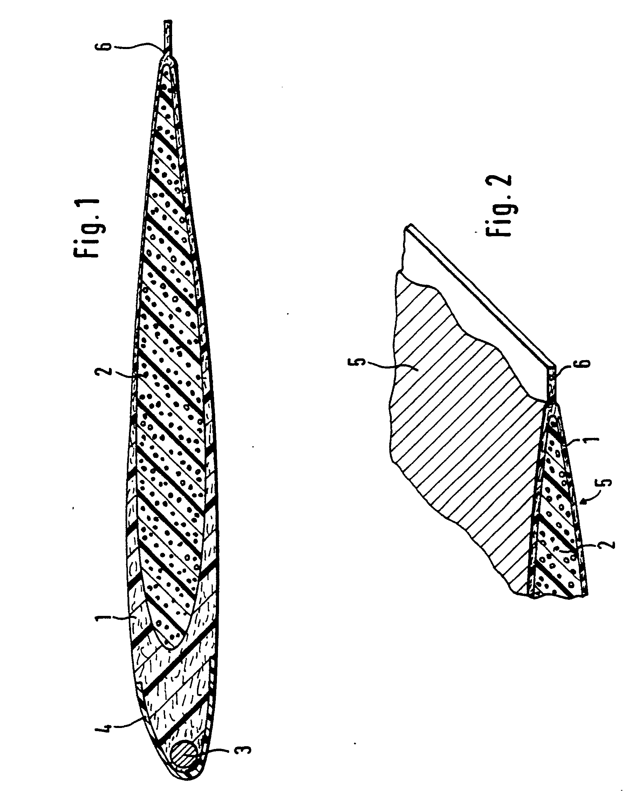

Das in Fig. 1 im Querschnitt dargestellte Rotorblatt besteht in seiner äußeren Struktur 1 aus einem glasfaserverstärkten Kunststoff, in die ein Kern 2 aus einem Hartschaum eingelegt ist. Ferner ist im Bereich der Vorderkante des Rotorblattes ein Strang 3 aus Blei in die GFK-Struktur 1 eingelegt. Wie aus der Figur ersichtlich, ist das Rotorblatt im Bereich seiner Vorderkante mit einer Schicht 4 aus einem radarabsorbierenden Material belegt, die zugleich erosionsmindernd wirkt. Die Schicht 4 besteht im Fall des hier beschriebenen Ausführungsbeispiels aus Polyurethan und weist eine Schichtdicke von etwa 1,2 mm auf.

Anstelle des Polyurethans kann selbstverständlich auch jedes andere Material, beispielsweise Keramik oder auch Polyetheretherketon (PEEK) verwendet werden, das vergleichbare Eigenschaften hinsichtlich der Streuung elektromagnetischer Strahlung sowie der Erosionsfestigkeit aufweist. Die Schicht 4 kann dabei überdies entweder die Form einer selbsttragenden Schale aufweisen, wie im Fall des hier beschriebenen Ausführungsbeispiels, oder aber als Beschichtung der bestehenden Struktur 1, beispielsweise mit Polyurethanlack, ausgebildet sein.

Wie Fig. 2 zeigt, ist weiterhin der rückwärtige Bereich des Rotorblattes zusätzlich mit einem radarreflektierenden Material verkleidet. Diese Verkleidung kann entweder als Primärstruktur, beispielsweise als metallisierte Schale aus glasfaserverstärktem Kunststoff, als Sekundärstruktur, beispielsweise in Form eines metallischen Gewebes, oder aber, wie im Fall des hier dargestellten Ausführungsbeispiels, als nichttragende Beschichtung 5 in Form einer Metallisierung, z.B. aus Leitlack, ausgebildet sein. Die abschließende Quetschkante 6 des Rotorblattprofils ist in diesem Fall von der Beschichtung ausgenommen.

Wie die Figur weiterhin zeigt, verlaufen zur weiteren Verwendung des Radarquerschnittes die Begrenzungen der Matallisierung 5 nicht in gerader Linie, sondern sind wellenförmig ausgebildet.

Insgesamt ergibt sich bei einem mit den vorstehend beschriebenen Rotorblättern ausgerüsteten Hubschrauber eine Reduzierung der Verratsreichweite um einen Faktor von etwa 2,5 für eine Entdeckungswahrscheinlichkeit von 50 %, verglichen mit einem mit herkömmlichen Rotorblättern ausgerüsteten Hubschrauber.

## Ansprüche

1. Rotorblatt, insbesondere für Hubschrauber, aus einem nichtmetallischen Werkstoff, bei dem im Bereich der Vorderkante eine erosionsmindernde Verkleidung angeordnet ist, dadurch gekennzeichnet, daß die Verkleidung (4) aus einem elektromagnetische Strahlung absorbierenden Werkstoff besteht und daß der rückwärtige Bereich des Rotorblattes mit einer das Reflexionsvermögen für elektromagnetische Strahlung erhöhenden Schicht (5) versehen ist.

2. Rotorblatt nach Anspruch 1, dadurch gekennzeichnet, daß die Verkleidung (4) der Vorderkante aus Polyurethan besteht.

3. Rotorblatt nach Anspruch 1, dadurch gekennzeichnet, daß die Verkleidung (4) der Vorderkante aus Keramik besteht.

4. Rotorblatt nach Anspruch 1, dadurch gekennzeichnet, daß die Verkleidung (4) der Vorderkante aus Polyetheretherketon (PEEK) besteht.

5. Rotorblatt nach Anspruch 1, dadurch gekennzeichnet, daß die Verkleidung (4) der Vorderkante aus einem Elastomermaterial besteht.

6. Rotorblatt nach Anspruch 1, dadurch gekennzeichnet, daß die Verkleidung (4) der Vorderkante aus einem Faserverbundwerkstoff besteht.

7. Rotorblatt nach einem der Ansprüche 1 bis 6, dadurch gekennzeichnet, daß die Verkleidung (4) der Vorderkante als selbsttragende Schale ausgebildet ist.

8. Rotorblatt nach einem der Ansprüche 1 bis 6, dadurch gekennzeichnet, daß die Verkleidung (4) als Beschichtung auf die Vorderkante aufgebracht ist.

9. Rotorblatt nach einem der Ansprüche 1 bis 8, dadurch gekennzeichnet, daß die auf den Hinterkantenbereich aufgebrachte Schicht (5) in einer Metallisierung der Oberfläche der Rotorblattstruktur (1) besteht.

10. Rotorblatt nach einem der Ansprüche 1 bis 9, dadurch gekennzeichnet, daß die Kanten der reflexionssteigernden Schicht (5) wellenförmig verlaufen.

Fig. 1

Fig. 2

EP 0 378 839 A2